# EUROPÄISCHE PATENTANMELDUNG

(11) **EP 2 014 403 A2**
(43) Veröffentlichungstag der Anmeldung: **14.01.2009**
(21) Anmeldenummer: 08007528.6
(22) Anmeldetag: 17.04.2008
(51) Int. Cl.: B23K 9/08

(54) **Verfahren zum Lichtbogenfügen mit Flachdraht**

(30) Priorität: 12.07.2007 DE 102007032574
(71) Anmelder: Linde Aktiengesellschaft, 80807 München (DE)
(72) Erfinder: Wilhelm, Gerald, 86551 Aichach (DE)

(57) **Zusammenfassung**

Um ein Verfahren zum Lichtbogenfügen, insbesondere zum Lichtbogenschweißen, zum Beispiel zum M[etall-]S[chutz]G[as]-Schweißen, wobei ein Lichtbogen (20) zwischen mindestens einer abschmelzenden Flachdrahtelektrode (10) und mindestens einem zu bearbeitenden Werkstück (30) brennt, so weiterzubilden, dass der Materialübergang in Tropfenform unabhängig von der Positionierung des Flachdrahts, insbesondere unabhängig von der Stellung des Flachdrahts zur Schweißnaht, gleichförmig und regelmäßig erfolgt, wird vorgeschlagen, dass der Lichtbogen (20) infolge zumindest zeitweiser Beeinflussung durch mindestens ein externes, insbesondere mindestens eine longitudinale Magnetfeldkomponente (Bₗ) und/oder mindestens eine transversale Magnetfeldkomponente (Bₜ) aufweisendes, Magnetfeld im Wesentlichen gleichmäßig über im Wesentlichen die gesamte Breite (12) der Flachdrahtelektrode (10) brennt.

## Beschreibung

### Technisches Gebiet

Die vorliegende Erfindung betrifft ein Verfahren zum Lichtbogenfügen, insbesondere zum Lichtbogenschweißen, zum Beispiel zum M[etall-]S[chutz]G[as]-Schweißen, wobei ein Lichtbogen zwischen mindestens einer abschmelzenden Flachdrahtelektrode und mindestens einem zu bearbeitenden Werkstück brennt.

### Stand der Technik

Lichtbogenfügen unter Schutzgas ist eine häufig eingesetzte Fügetechnik, die insbesondere das Lichtbogenschweißen und das Lichtbogenlöten umfasst. Des Weiteren gehört zum Lichtbogenfügen auch das Verbinden von artverschiedenen Werkstoffen, wobei ein Werkstoff aufgeschmolzen wird, während der andere Werkstoff nur erwärmt wird.

Beim Lichtbogenschweißen brennt ein Lichtbogen zwischen einer in einem Brenner angeordneten Elektrode und dem zu bearbeitenden Werkstück. Eine Schweißverbindung entsteht hierbei durch Aufschmelzen des Grundwerkstoffs an der Bearbeitungsstelle im Lichtbogen und anschließende Wiedererstarrung des Werkstoffs.

Hierbei werden zum Lichtbogenschweißen unter Schutzgas, dem sogenannten M[etall-]S[chutz]G[as]-Schweißen, verschiedene Schweißverfahren eingesetzt: Neben dem Verfahren mit abschmelzender Elektrode, zu dem das M[etall-]A[ktiv]G[as]-Schweißen und das [Metall-]I[nert]G[as]-Schweißen gehören, existiert das mit nicht abschmelzender Elektrode arbeitende W[olfram-]I[nert]G[as]-Schweißen und das Plasmaschweißen.

Zur Steigerung der Produktivität werden in den letzten Jahren auch zunehmend Hochleistungsschweißverfahren eingesetzt. Hochleistungsschweißverfahren, die in der Regel mit abschmelzenden Elektroden arbeiten, zeichnen sich im Vergleich zum konventionellen Metall-Schutzgas-Schweißen durch höhere Abschmelzleistungen der Elektrode aus. Die Abschmelzleistung ist hierbei proportional zum Durchmesser des Drahtes und zur Vorschubgeschwindigkeit des Drahtes.

Die höheren Abschmelzleistungen lassen sich in höhere Schweißgeschwindigkeiten und/oder in größere Schweißnahtvolumina umsetzen. Grundlagen des Metall-Schutzgas-Hochleistungsschweissens sind im Merkblatt des Deutschen Verbands für Schweissen und verwandte Verfahren e.V., DSV 0909-1 (September 2000) und DSV 0909-2 (Juni 2003) näher beschrieben.

Das Lichtbogenlöten unter Schutzgas oder M[etall-]S[chutz]G[as]-Löten ist eine Fügetechnik, die ebenfalls eine stoffschlüssige Verbindung mittels eines Lichtbogens schafft. Für die Verbindung wird jedoch nur der Zusatzwerkstoff im Lichtbogen aufgeschmolzen und nicht - wie beim Lichtbogenschweißen - Grundwerkstoff und Zusatzwerkstoff.

Der Lichtbogen selbst ist ein Plasma aus ionisiertem Gas und Metalldampf in unterschiedlichen Anteilen. Hierdurch wirken die physikalischen Eigenschaften der zugeführten Schutzgase oder Prozessgase unmittelbar und schnell auf den Lichtbogen ein. Darüber hinaus kommen die zugeführten Schutzgase in Berührung mit dem heißen Werkstoff unter Bildung eines reaktionsfreudigen Bereichs, in dem zusätzlich die chemischen und metallurgischen Wirkungen der Gase wichtig sind.

Zum Metall-Schutzgas-Fügen wird ein Schutzgas verwendet, das zusätzlich zur inerten Basis aus Argon (Ar) oder aus Helium (He) noch geringe Mengen aktiver Gase, beispielsweise Kohlendioxid (CO₂) oder Sauerstoff (O₂) oder Stickstoff (N₂), enthält, um die Schweißverbindung entsprechend den besonderen technologischen Erfordernissen zu beeinflussen, wobei der Aktivgasanteil zum Beispiel für einen besseren Einbrand oder für eine geringere Oberflächenspannung der Schmelze sorgt. Das Inertgas, beispielsweise ein Edelgas(gemisch) aus Argon und/oder aus Helium, schützt das flüssige Metall unter dem Lichtbogen vor Oxidation.

Unter Anderem auch aus wirtschaftlichen Gründen haben sich beim M[etall-]S[chutz]G[as]-Fügen Mischgase aus Argon mit Sauerstoff und/oder mit Kohlendioxid durchgesetzt. Zunehmender Mechanisierungsgrad und vermehrter Einsatz der Impulstechnik machen Mischgase mit abgesenktem Sauerstoff- oder Kohlendioxidanteil immer beliebter.

Um die Effizienz der Wärmeübertragung vom Lichtbogen zur Fügestelle bei niedrigaktiven Gasen zu erhöhen und um den Wirkungsgrad des Lichtbogens zu verbessern, wird dem Schutzgas Helium oder Wasserstoff beigemischt (vgl. Dokument "Leistung durch Innovation und Kompetenz. Die Linde Schweißschutzgase.", Bestell-Nr. 43385260 0805 - 1.5 Au).

Die Auswahl des beim Lichtbogenfügen zugeführten Schutzgases erfolgt üblicherweise nach
- den Anforderungen an die Schweißverbindung,
- der Arbeitsposition,
- der Art des Grundwerkstoffes und des Zusatzwerkstoffs,
- der Materialdicke und dem Oberflächenzustand der Grundwerkstoffe,
- dem Mechanisierungsgrad und
- der Lichtbogenart.

Zur Erzeugung des Lichtbogens wird ein elektrisches Feld zwischen der abschmelzenden Elektrode und dem zu bearbeitenden Werkstück angelegt. Der Materialübergang von der abschmelzenden Elektrode zum Werkstück erfolgt durch Ablösung von Tropfen von der Elektrode.

Neben dem Schweißen mit nicht pulsierendem Gleichstrom gibt es auch das Schweißen mit pulsierendem Gleichstrom, bei dem der Schweißstrom zumindest eine Impulsstromphase und eine Grundstromphase aufweist, in der der Strom deutlich niedriger als in der Impulsstromphase ist.

Ferner gibt es auch ein Schweißen mit Wechselstrom, bei dem die Polarität wechselt. Auch beim Wechselstromschweißen weist die positive Phase häufig zumindest eine Impulsstromphase mit hohem Strom und eine Grundstromphase mit niedrigem Strom auf.

Das Metall-Schutzgas-Schweißen mit Wechselstrom wird seit mehreren Jahren angewandt, und verschiedene Druckschriften aus dem Stand der Technik betreffen diesen Prozess. So offenbart die Druckschrift DE 40 23 155 A1 eine Synchronisation von Drahtzufuhr und negativer Polung des Wechselstroms. In der Druckschrift DE 199 06 039 A1 wiederum wird ein maximaler Strompegel für die positive Phase festgesetzt. Die Druckschrift EP 0 890 407 A1 beinhaltet eine Vorgehensweise zur Verringerung der Abfallzeit beim Abfall des positiven Schweißstroms. Die Druckschrift EP 1 103 329 A2 beschreibt ein Verfahren, das ein Unterbrechen des Lichtbogens verhindert. Die Druckschrift EP 1 491 278 A2 offenbart die Verwendung von Helium und von dotiertem Helium im Schutzgas beim Wechselstromschweißen.

Unter dem Begriff Lichtbogenfügen werden die mit Lichtbogen arbeitenden Verfahren zusammengefasst, also sowohl das Verbindungsschweißen und das Verbindungslöten als auch das Auftragsschweißen und das Auftragslöten.

Weiterhin ist es bekannt, dass der Lichtbogen beim Schweißen mittels externer longitudinaler oder transversaler Magnetfelder in seiner Beschaffenheit und/oder in seiner Lage beeinflusst werden kann. Eine Beeinflussung des Lichtbogenschweißens mittels externer Magnetfelder ist beispielsweise
- in U. Dilthey, "Beitrag zur Lichtbogensteuerung durch transversale Zusatzmagnetfelder bei mechanisierten Lichtbogenschweissverfahren", Dissertation, RWTH Aachen (Rheinisch-Westfälische Technische Hochschule Aachen), 1972,
- in H.-B. Basler, "Beeinflussung der Metall-Schutzgasschweißung durch Magnetfelder", Dissertation, TU Hannover (Technische Universität Hannover),1973, oder
- in U. Dilthey, U. Reisgen, P. Warmuth, "MAGM-Hochleistungsschweißen mit Massiv- und Fülldrähten", Schweißen und Schneiden Bd. 51, 1999, Nr. 3, S. 139 - 143 beschrieben.

Neben der Verwendung runder Drahtelektroden ist schließlich beim M[etall-]S[chutz]G[as]-Schweißen auch der Einsatz von Flachdrähten bekannt. Grundsätzlich handelt es sich bei einem Flachdraht um einen Zusatzwerkstoff mit im Wesentlichen rechteckigem Querschnitt, zum Beispiel von etwa vier Millimeter auf etwa 0,5 Millimeter. Aber auch andere Abmessungen sind möglich, diese sind aber derzeit noch nicht genormt. Flachdrähte werden durch Walzen von Runddrähten oder durch Schneiden von Bändern erzeugt. Zum Flachdraht-Schweißen sind Drahtvorschub und Schweißbrenner entsprechend zu adaptieren.

Exemplarisch dargestellt ist das M[etall-]S[chutz]G[as]-Schweißen mit Flachdraht im Abschlussbericht "Einsatz von Flachdrahtelektroden beim vollmechanisierten MSG-Schweißen von höherfesten Feinkornbaustählen", Vorhaben DVS-Nr. 03.059/AiF-Nr. 13.784 N (Laufzeit vom 1. März 2004 bis 31. August 2006; beteiligtes Institut: SLV Duisburg Niederlassung der GSI mbH).

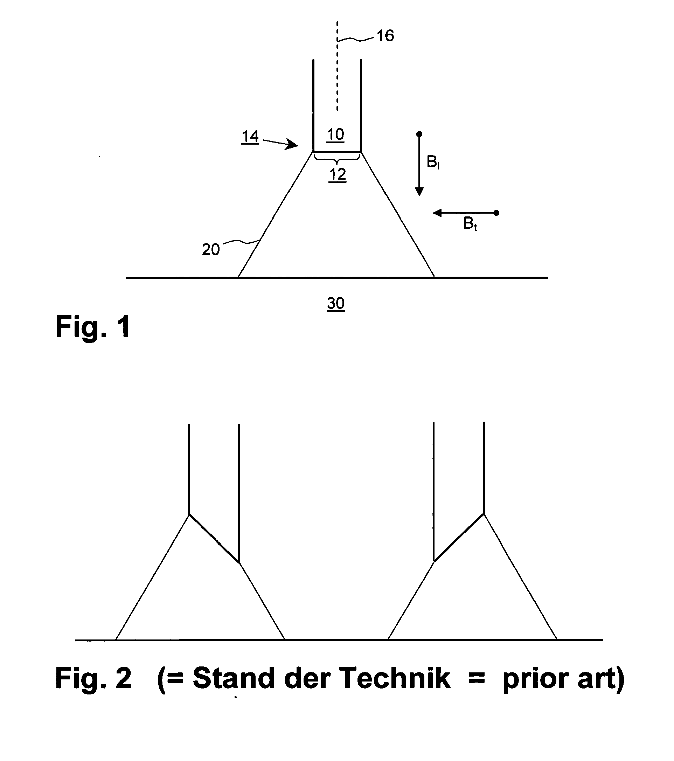

Zu bedenken ist beim M[etall-]S[chutz]G[as]-Schweißen mit Flachdraht allerdings, dass der Materialübergang in Tropfenform insbesondere dann, wenn der Flachdraht quer zur Schweißnaht gestellt ist, ungleichförmig und/oder unregelmäßig erfolgt, denn in der genannten Flachdrahtstellung brennt der Lichtbogen zumindest partiell an der Seite der Flachdrahtelektrode hoch und verursacht hierdurch Instabilitäten in der Tropfenablösung und im Tropfenübergang (vgl. Fig. 2; zwar könnte der Flachdraht längs der Schweißnaht orientiert und in dieser Stellung gehalten werden, jedoch ist in dieser Längsstellung kein breiter Abbrand gewährleistet; ein derartiger breiter Abbrand ist üblicherweise nur gewährleistet, wenn der Flachdraht quer zur Schweißnaht orientiert und in dieser Stellung gehalten wird).

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren der eingangs genannten Art so weiterzubilden, dass beim Lichtbogenfügen mit Flachdraht, insbesondere beim Lichtbogenschweißen mit Flachdraht, zum Beispiel beim M[etall-]S[chutz]G[as]-Schweißen mit Flachdraht, der Materialübergang in Tropfenform unabhängig von der Positionierung des Flachdrahts, insbesondere unabhängig von der Stellung des Flachdrahts zur Schweißnaht, gleichförmig und regelmäßig erfolgt.

Diese Aufgabe wird durch ein Verfahren mit den im Anspruch 1 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung darauf, den Lichtbogen durch mindestens ein externes, insbesondere mindestens eine longitudinale Magnetfeldkomponente und/oder mindestens eine transversale Magnetfeldkomponente aufweisendes, Magnetfeld derart zu steuern, dass ein undefiniertes Hochbrennen auf die Ränder und/oder auf die Seiten der abschmelzenden Elektrode unterbleibt und dass der Übergang, insbesondere das tropfenweise Abschmelzen, des Materials oder Werkstoffs von der Elektrode im Wesentlichen gleichförmig und im Wesentlichen regelmäßig erfolgt.

In bevorzugter Weise dient das Anlegen mindestens eines externen longitudinalen Magnetfelds und/oder das Anlegen mindestens eines externen transversalen Magnetfelds der Unterstützung des rotierenden Tropfenübergangs beim Sprühlichtbogen oder beim rotierenden Lichtbogen. Diese Lichtbogenarten bedürfen, um kurzschlussfrei zu verlaufen, keiner zusätzlichen Impulsüberlagerung, denn die mit den hohen Abschmelzleistungen einhergehenden hohen Schweißstromstärken rufen einen stark ausgeprägten Pinch-Effekt hervor, der seinerseits die Tropfenablösung maßgeblich herbeiführt.

Gemäß einer vorteilhaften Ausführungsform der vorliegenden Erfindung können die longitudinale Magnetfeldkomponente und/oder die transversale Magnetfeldkomponente durch jeweils mindestens zwei in im Wesentlichen gleicher Richtung angeordnete Spulen, dessen Spulenströme ein phasenverschobenes sinusförmiges System darstellen, bereit gestellt werden, so dass sich das externe Magnetfeld aus mindestens zwei durch mindestens vier Spulen bereit gestellten, zueinander phasenverschobenen longitudinalen und/oder transversalen Magnetfeldkomponenten unter Bildung mindestens eines rotierenden und/oder konzentrisch angeordneten resultierenden Magnetfelds zusammensetzen kann.

In zweckmäßiger Ausgestaltung der vorliegenden Erfindung kann die Oszillationsfrequenz, insbesondere die Rotationsfrequenz, des externen Magnetfelds etwa fünfzig Hertz bis etwa zwei Kilohertz, insbesondere etwa einhundert Hertz bis etwa ein Kilohertz, betragen. Unabhängig hiervon oder in Verbindung hiermit kann das sich ergebende externe Magnetfeld eine Flussdichte von etwa ein Millitesla bis etwa zwölf Millitesla, insbesondere von etwa zwei Millitesla bis etwa sieben Millitesla, aufweisen.

Durch vorgenannte optionale technische Maßnahmen ist beim M[etall-]S[chutz]G[as]-Schweißen mit Flachdraht gewährleistet, dass der Materialübergang in Tropfenform auch dann, wenn der Flachdraht quer zur Schweißnaht gestellt ist, gleichförmig und regelmäßig erfolgt, das heißt auch in der genannten Querstellung des Flachdrahts brennt der Lichtbogen, insbesondere der Sprühlichtbogen oder der rotierende Lichtbogen, nicht an der Seite der Flachdrahtelektrode hoch, so dass keinerlei Instabilitäten in der Tropfenablösung und im Tropfenübergang beobachtbar sind.

Alternativ oder ergänzend hierzu dient das Anlegen eines externen transversalen Magnetfelds der Auslenkung des Lichtbogens längs oder quer zur Schweißrichtung.

Um einen breiten sowie gleichmäßigen Abbrand an der abschmelzenden Flachdrahtelektrode zu gewährleisten, kann das, insbesondere aus mindestens zwei zueinander phasenverschobenen transversalen Magnetfeldkomponenten resultierende, externe Magnetfeld, insbesondere um die (Längs-)Achse der abschmelzenden Flachdrahtelektrode, mit einer Frequenz oszillieren, die in etwa zumindest doppelt so groß wie die prozessimmanente Tropfenfrequenz ist, die oft auch natürliche Tropfenfrequenz (= Frequenz, mit der sich die abschmelzenden Tropfen von der Flachdrahtelektrode lösen) genannt wird.

Gemäß einer bevorzugten Weiterbildung der vorliegenden Erfindung kann durch das externe Magnetfeld ein Rotieren des Abschlussbereichs der abschmelzenden Elektrode und/oder des Lichtbogens bewirkt werden. Auch dies kann in zweckmäßiger Weise dazu beitragen, dass der Lichtbogen infolge der zumindest zeitweisen Beeinflussung durch das externe Magnetfeld gleichmäßig über im Wesentlichen die gesamte Breite des Flachdrahts brennt.

Die vorliegende Erfindung betrifft ferner die Verwendung mindestens eines zumindest Argon (Ar), Helium (He), Kohlendioxid (CO₂), Sauerstoff (O₂) und/oder Stickstoff (N₂) enthaltenden Schutzgases beim Bearbeiten, insbesondere beim Lichtbogenfügen, zum Beispiel beim Lichtbogenschweißen, wie etwa beim M[etall-]S[chutz]G[as]-Schweißen, mindestens eines Werkstücks aus Stahl und/oder aus Nichteisenmetall, insbesondere
- aus Aluminium oder aus mindestens einer Aluminiumlegierung oder
- aus Magnesium oder aus mindestens einer Magnesiumlegierung.

Im verwendeten Schutzgas sind vorteilhafterweise
- etwa zehn Volumenprozent (Vol.-%) bis etwa achtzig Vol.% Helium, insbesondere etwa zwanzig Vol.-% bis etwa siebzig Vol.-% Helium, zum Beispiel etwa dreißig Vol.-% bis etwa sechzig Vol.-% Helium, und/oder
- zusätzlich zum Heliumanteil etwa 0,5 Vol.-% bis etwa sieben Vol.-% Wasserstoff, insbesondere etwa ein Vol.-% bis etwa vier Vol.-% Wasserstoff,
enthalten.

Eine Zugabe von Helium ist in vielen Fällen empfehlenswert, denn dies bietet die Möglichkeit einer gezielten Steuerung der Aufmischung; auch wird durch Zugabe von Helium die Nahtgeometrie positiv beeinflusst. Die Vorteile der Zugabe von Wasserstoff ergeben sich in Abhängigkeit vom Grundwerkstoff und/oder vom Zusatzwerkstoff.

Die jeweilige Festlegung des geeigneten Gases bzw. der geeigneten Gasmischung erfolgt in Abhängigkeit von der jeweiligen Schweißaufgabe bzw. von der jeweiligen Hartlötaufgabe, insbesondere unter Berücksichtigung von Grundwerkstoff und von Zusatz- bzw. Auftragswerkstoff. Es kommen sowohl Reingase als auch Zwei-, Drei- und Mehr-Komponenten-Gemische zum Einsatz.

In vielen Fällen erweisen sich auch dotierte Gasmischungen als besonders vorteilhaft, wobei dotierte Gasmischungen Dotierungen mit aktiven Gasen im v[olume]p[er]m[illion]-Bereich aufweisen, das heißt die Dotierung mit Aktivgas(en) erfolgt im Bereich von weniger als etwa einem Prozent, meist im Bereich von weniger als etwa 0,1 Volumenprozent (Vol.-%). Als Dotiergas werden vorzugsweise aktive Gase, wie beispielsweise Sauerstoff (O₂), Kohlendioxid (CO₂), Stickstoffmonoxid (NO), Distickstoffmonoxid (N₂O = Lachgas) oder Stickstoff (N₂), verwendet.

Die vorliegende Erfindung ist insbesondere zum Einsatz im vollmechanisierten bzw. automatisierten Betrieb geeignet; bevorzugte Einsatzgebiete der vorliegenden Erfindung sind zum Beispiel der Anlagenbau, der Schienenfahrzeugbau und das Auftragsschweißen.

Mit besonderem Nutzen kann die vorliegende Erfindung dann zum Einsatz gelangen, wenn im Werkstück ein durch zwei Kanten gebildeter Spalt zu überbrücken ist. Beim Verbindungsschweißen zeigen sich die erfindungsgemäßen Vorteile also in besonderer Weise. Beim Auftragsschweißen und Auftragslöten zeigt das erfindungsgemäße Verfahren ebenfalls Vorteile, denn hier kann die Aufmischung in vorteilhafter Weise beeinflusst werden.

Das erfindungsgemäße Verfahren eignet sich insbesondere, wenn Werkstücke aus Stählen und/oder aus Aluminium bzw. aus Aluminiumlegierungen bearbeitet werden. So eignet sich das erfindungsgemäße Verfahren exemplarisch für alle Stahlsorten einschließlich Baustählen, Feinkornbaustählen sowie nichtrostenden Stählen. Weiterhin eignet sich das erfindungsgemäße Verfahren auch für Nickelbasiswerkstoffe.

Ebenso ist eine Anwendung des erfindungsgemäßen Verfahrens für andere Nichteisenmetalle, wie beispielsweise Magnesium bzw. Magnesiumlegierungen, möglich. Weiterhin werden durch das erfindungsgemäße Verfahren die Möglichkeiten zur Herstellung von Mischverbindungen erweitert.

Das erfindungsgemäße Verfahren bietet den Vorteil einer Stabilisierung des Werkstoffübergangs beim MSG-Flachdrahtschweißen; des Weiteren kann mittels der vorliegenden Erfindung infolge geringerer Spritzerbildung das Erfordernis der Nacharbeit erheblich reduziert werden.

### Kurze Beschreibung der Zeichnungen

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 9 nachgeordneten Ansprüche verwiesen, andererseits werden weitere Ausgestaltungen, Merkmale und Vorteile der vorliegenden Erfindung nachstehend anhand des durch Fig. 1 veranschaulichten Ausführungsbeispiels näher erläutert.

Es zeigt:
- Fig. 1: in schematischer Prinzipdarstellung ein Ausführungsbeispiel einer Anordnung, mittels derer das erfindungsgemäße Verfahren zum Lichtbogenfügen realisierbar ist; und
- Fig. 2: in schematischer Prinzipdarstellung eine Anordnung, mittels derer ein im vor- stehenden Kapitel "Stand der Technik" beschriebenes Verfahren zum Lichtbogenfügen realisierbar ist.

### Bester Weg zur Ausführung der Erfindung

Gemäß der Darstellung in Fig. 1 brennt beim M[etall-]S[chutz]G[as]-Flachdrahtschweißen ein zum Beispiel kegelförmiger Lichtbogen 20 zwischen einer abschmelzenden, zum Beispiel positiv gepolten Flachdrahtelektrode 10 (eines in Fig. 1 aus Gründen der Übersichtlichkeit der Darstellung nicht explizit gezeigten Schweißbrenners) und einem zu bearbeitenden, insbesondere zu fügenden, Werkstück 30 aus Stahl oder aus Nichteisenmetall, zum Beispiel
- aus Aluminium oder aus Aluminiumlegierung oder
- aus Magnesium oder aus Magnesiumlegierung.

Zur Erzeugung des Lichtbogens 20 wird ein elektrisches Feld zwischen dem abschmelzenden Flachdraht 10, der bei einer exemplarischen Dimensionierung von etwa vier Millimeter auf etwa 0,5 Millimeter einen rechteckigen Querschnitt aufweist, und dem zu bearbeitenden Werkstück 30 angelegt. Der Materialübergang von der abschmelzenden Elektrode 10 zum Werkstück 30 erfolgt durch Ablösung von Tropfen von der Elektrode 10.

Hierbei sind exemplarisch Abschmelzleistungen oder Abschmelzraten von etwa sechs Kilogramm pro Stunde bis etwa 18 Kilogramm pro Stunde, insbesondere von etwa sieben Kilogramm pro Stunde bis etwa 14 Kilogramm pro Stunde, zum Beispiel von etwa acht Kilogramm pro Stunde bis etwa elf Kilogramm pro Stunde, erzielbar.

Bei Verwendung eines Gleichstroms mit positiver Polung der abschmelzenden Elektrode 10 zur Erzeugung des Lichtbogens 20 erfolgt die Tropfenablösung unter Einwirkung des sogenannten Pinch-Effekts, der ein Einschnüren des Tropfens bewirkt und damit die Tropfenablösung unterstützt und für Prozessstabilität sorgt.

Der Pinch-Effekt unterstützt die Tropfenablösung nur bei positiver Polung der Flachdrahtelektrode 10, nicht aber bei negativer Polung der Flachdrahtelektrode 10. Eine negative Polung der Flachdrahtelektrode 10 führt deshalb ohne zusätzliche Maßnahmen vor allem bei höheren und hohen Abschmelzleistungen zu einem sehr ungeordneten und wenig effektiven Materialübertrag von der Flachdrahtelektrode 10 zum Werkstück 30, weshalb eine negative Polung der Flachdrahtelektrode 10 vermieden werden sollte.

Neben dem MSG-Schweißen mit nicht pulsierendem Gleichstrom kann erfindungsgemäß auch das MSG-Schweißen mit pulsierendem Gleichstrom zum Einsatz gelangen, bei dem der Schweißstrom zumindest eine Impulsstromphase und eine Grundstromphase aufweist, in der der Strom deutlich niedriger als in der Impulsstromphase ist.

Ferner kann im Ausführungsbeispiel gemäß Fig. 1 auch ein Schweißen mit Wechselstrom zum Einsatz kommen, bei dem die Polarität wechselt. Auch beim Wechselstromschweißen weist die positive Phase häufig zumindest eine Impulsstromphase mit hohem Strom und eine Grundstromphase mit niedrigem Strom auf.

Um einen breiten sowie gleichmäßigen Abbrand an der abschmelzenden Flachdrahtelektrode 10 zu bewerkstelligen, das heißt um zu gewährleisten, dass der Übergang, insbesondere das tropfenweise Abschmelzen, des Materials oder des Werkstoffs von der Elektrode 10 gleichförmig und regelmäßig erfolgt, wird der Sprüh- oder rotierende Lichtbogen 20 gemäß Fig. 1 durch Verwendung zusätzlicher, zur richtungsmäßigen Steuerung des Tropfenübergangs vorgesehener
- externer longitudinaler Magnetfelder Bₗ und/oder
- externer transversaler Magnetfelder Bₜ, zum Beispiel mit einer Oszillationsfrequenz, die in etwa zumindest doppelt so groß wie die natürliche Tropfenfrequenz ist, mit der sich die abschmelzenden Tropfen von der Elektrode 10 lösen,
derart gesteuert, dass ein undefiniertes (, im Stand der Technik gemäß Fig. 2 erfolgendes) Hochbrennen auf die Ränder und/oder auf die Seiten 14 der abschmelzenden Elektrode 10 unterbleibt.

Das gesamte oder resultierende, insbesondere rotierende und/oder um den Schweißbrenner, also um Flachdrahtelektrode 10 und Lichtbogen 20 konzentrisch angeordnete externe Magnetfeld ergibt sich hierbei aus der, insbesondere vektoriellen, Überlagerung oder Summe zueinander zum Beispiel sinusförmig phasenverschobener longitudinaler Komponenten Bₗ und/oder transversaler Komponenten Bₜ, die durch mindestens zwei unter im Wesentlichen gleicher Orientierung angeordnete Spulen bereit gestellt werden.

Im Speziellen können mindestens zwei zueinander zum Beispiel sinusförmig phasenverschobene transversale Magnetfeldkomponenten Bₜ zu mindestens einem resultierenden externen Magnetfeld, das um die Längsachse 16 der abschmelzenden Flachdrahtelektrode 10 rotiert, und damit zu einem rotierenden Lichtbogen 20 führen.

Die Gesamtfrequenz liegt hierbei in einer exemplarischen Größenordnung von fünfzig Hertz bis zwei Kilohertz, insbesondere von einhundert Hertz bis ein Kilohertz. Unabhängig hiervon oder in Verbindung hiermit liegt die durch die mindestens vier Spulen zur Verfügung gestellte Flussdichte in einer exemplarischen Größenordnung von ein Millitesla bis zwölf Millitesla, insbesondere von zwei Millitesla bis sieben Millitesla.

Wird also als abschmelzende Elektrode 10 ein Flachdraht verwendet, so brennt der mit Gleichstrom oder mit Wechselstrom betriebene Lichtbogen 20 erfindungsgemäß auch dann, wenn der Flachdraht quer zur Schweißnaht gestellt ist, infolge zumindest zeitweiser Beeinflussung durch das oder die externen Magnetfelder Bₗ, Bₜ gleichmäßig über den Flachdraht 10, das heißt über das ganze Ende oder die gesamte Breite 12 des Flachdrahts 10; mithin werden die Tropfenablösung und der Materialübergang auf voller Breite 12 des Flachdrahts 10 beim Sprüh- oder rotierenden Lichtbogen 20 erfindungsgemäß in positiver Weise beeinflusst.

Als Schutzgas wird ein Gas oder Gasgemisch verwendet, das
- mindestens einen Inertanteil, insbesondere mindestens ein Inertgas, zum Beispiel Argon (Ar) oder Helium (He), und
- mindestens einen Aktivanteil, insbesondere mindestens ein Aktivgas, zum Beispiel Kohlendioxid (CO₂), Sauerstoff (O₂) und/oder Stickstoff (N₂),
enthält; insbesondere können im Schutzgas
- etwa zehn Volumenprozent (Vol.-%) bis etwa achtzig Vol.-% Helium, insbesondere etwa zwanzig Vol.-% bis etwa siebzig Vol.-% Helium, zum Beispiel etwa dreißig Vol.-% bis etwa sechzig Vol.-% Helium, und/oder
- etwa 0,5 Vol.-% bis etwa sieben Vol.-% Wasserstoff, insbesondere etwa ein Vol.-% bis etwa vier Vol.-% Wasserstoff,
enthalten sein.

### Bezugszeichenliste

- 10: abschmelzende Flachdrahtelektrode, insbesondere abschmelzender Flachdraht
- 12: Breite der abschmelzenden Flachdrahtelektrode 10
- 14: Abschlussbereich der abschmelzenden Flachdrahtelektrode 10
- 16: Achse der abschmelzenden Flachdrahtelektrode 10, insbesondere Längsachse des abschmelzenden Flachdrahts
- 20: Lichtbogen
- 30: Werkstück
- Bₗ: longitudinales Magnetfeld, insbesondere longitudinale Komponente des externen Magnetfelds
- Bₜ: transversales Magnetfeld, insbesondere transversale Komponente des externen Magnetfelds

## Patentansprüche

1. Verfahren zum Lichtbogenfügen, insbesondere zum Lichtbogenschweißen, zum Beispiel zum M[etall-]S[chutz]G[as]-Schweißen, wobei ein Lichtbogen (20) zwischen mindestens einer abschmelzenden Flachdrahtelektrode (10) und mindestens einem zu bearbeitenden Werkstück (30) brennt,
**dadurch gekennzeichnet,**
**dass** der Lichtbogen (20) infolge zumindest zeitweiser Beeinflussung durch mindestens ein externes, insbesondere mindestens eine longitudinale Magnetfeldkomponente (Bₗ) und/oder mindestens eine transversale Magnetfeldkomponente (Bₜ) aufweisendes, Magnetfeld im Wesentlichen gleichmäßig über im Wesentlichen die gesamte Breite (12) der Flachdrahtelektrode (10) brennt.

2. Verfahren gemäß Anspruch 1, **dadurch gekennzeichnet**,
- die longitudinale Magnetfeldkomponente (Bₗ) und/oder die transversale Magnetfeldkomponente (Bₜ) durch mindestens zwei unter im Wesentlichen gleicher Orientierung angeordnete Spulen bereit gestellt werden und
- dass sich das externe Magnetfeld aus mindestens zwei durch mindestens vier Spulen bereit gestellten, zueinander phasenverschobenen longitudinalen (Bₗ) und/oder transversalen (Bₜ) Magnetfeldkomponenten unter Bildung mindestens eines rotierenden und/oder konzentrisch angeordneten resultierenden Magnetfelds zusammensetzt.

3. Verfahren gemäß Anspruch 1 oder 2, **dadurch gekennzeichnet, dass** das aus mindestens zwei zueinander phasenverschobenen transversalen (Bₜ) Magnetfeldkomponenten resultierende externe Magnetfeld, insbesondere um die Achse (16), zum Beispiel Längsachse, der abschmelzenden Flachdrahtelektrode (10), mit einer Frequenz oszilliert, die in etwa zumindest doppelt so groß wie die natürliche Tropfenfrequenz ist, mit der sich die abschmelzenden Tropfen von der Flachdrahtelektrode (10) lösen.

4. Verfahren gemäß mindestens einem der Ansprüche 1 bis 3, **dadurch gekennzeichnet,**
- **dass** die Oszillationsfrequenz, insbesondere die Rotationsfrequenz, des externen Magnetfelds etwa fünfzig Hertz bis etwa zwei Kilohertz, insbesondere etwa einhundert Hertz bis etwa ein Kilohertz, beträgt und/oder
- **dass** das externe Magnetfeld eine Flussdichte von etwa ein Millitesla bis etwa zwölf Millitesla, insbesondere von etwa zwei Millitesla bis etwa sieben Millitesla, aufweist.

5. Verfahren gemäß mindestens einem der Ansprüche 1 bis 4, **dadurch gekennzeichnet,**
- **dass** der Abschlussbereich (14) der abschmelzenden Flachdrahtelektrode (10) und/oder der Lichtbogen (20) durch die Wirkung des externen Magnetfelds rotiert und/oder
- **dass** der Lichtbogen (20) mittels des externen Magnetfelds so gesteuert wird,
-- dass ein undefiniertes Hochbrennen an den Rändern und/oder an den Seiten der abschmelzenden Flachdrahtelektrode (10) unterbleibt und/oder
-- dass das, insbesondere tropfenweise, Abschmelzen des Materials oder Werkstoffs von der Flachdrahtelektrode (10) im Wesentlichen regelmäßig erfolgt.

6. Verfahren gemäß mindestens einem der Ansprüche 1 bis 5, **dadurch gekennzeichnet, dass** als Schutzgas mindestens ein Gas oder mindestens ein Gasgemisch verwendet wird, das zumindest Argon (Ar), Helium (He), Kohlendioxid (CO₂), Sauerstoff (O₂) und/oder Stickstoff (N₂) enthält.

7. Verfahren gemäß Anspruch 6, **dadurch gekennzeichnet, dass** im Schutzgas
- etwa zehn Volumenprozent (Vol.-%) bis etwa achtzig Vol.-% Helium, insbesondere etwa zwanzig Vol.-% bis etwa siebzig Vol.-% Helium, zum Beispiel etwa dreißig Vol.-% bis etwa sechzig Vol.-% Helium, und/oder
- etwa 0,5 Vol.-% bis etwa sieben Vol.-% Wasserstoff, insbesondere etwa ein Vol.-% bis etwa vier Vol.-% Wasserstoff,
enthalten sind.

8. Verfahren gemäß mindestens einem der Ansprüche 1 bis 7, **dadurch gekennzeichnet, dass** das Werkstück (30) aus Stahl und/oder aus Nichteisenmetall ist.

9. Verwendung mindestens eines zumindest Argon (Ar), Helium (He), Kohlendioxid (CO₂), Sauerstoff (O₂) und/oder Stickstoff (N₂) enthaltenden Schutzgases beim Bearbeiten, insbesondere beim Lichtbogenfügen, zum Beispiel beim Lichtbogenschweißen, wie etwa beim M[etall-]S[chutz]G[as]-Schweißen, mindestens eines Werkstücks (30) aus Stahl und/oder aus Nichteisenmetall.

10. Verwendung gemäß Anspruch 9, **dadurch gekennzeichnet, dass** im Schutzgas
- etwa zehn Volumenprozent (Vol.-%) bis etwa achtzig Vol.-% Helium, insbesondere etwa zwanzig Vol.-% bis etwa siebzig Vol.-% Helium, zum Beispiel etwa dreißig Vol.-% bis etwa sechzig Vol.-% Helium, und/oder
- etwa 0,5 Vol.-% bis etwa sieben Vol.-% Wasserstoff, insbesondere etwa ein Vol.-% bis etwa vier Vol.-% Wasserstoff,
enthalten sind.
